# EUROPEAN PATENT SPECIFICATION

(11) **EP 0 634 965 B1**
(45) Date of publication and mention of the grant of the patent: **28.03.2001**
(21) Application number: 94907805.9
(22) Date of filing: 10.01.1994
(51) Int. Cl.: B25B 23/144

(54) **SOCKET FOR TURNING A THREADED CONNECTOR BY POWER TOOL**
STECKSCHLUESSEL ZUM DREHEN EINER SCHRAUBVERBINDUNG MITTELS EINES KRAFTANGETRIEBENEN WERKZEUGS
DOUILLE SERVANT A FAIRE TOURNER UN RACCORD FILETE A L'AIDE DUN OUTIL A MOTEUR

(30) Priority: 22.01.1993 US 7608
(43) Date of publication of application: 25.01.1995
(73) Proprietor: Junkers, John K., Saddle River, New Jersey 07458 (US)
(72) Inventor: Junkers, John K., Saddle River, New Jersey 07458 (US)
(74) Representative: Newby, Martin John
(86) International application number: PCT/US94/00404
(87) International publication number: WO 94/16863

(56) References cited:
- EP-A- 0 232 606
- WO-A-88/09543
- US-A- 4 709 182
- US-A- 4 759 225
- US-A- 5 123 313

## Description

### Technical Field

The present invention relates to sockets which are used in conjunction with a power tool, such as for example, a wrench, for turning a threaded connector, such as for example, a nut.

### Background Art

The problem for a consumer who uses power tools for turning threaded connectors, is that the consumer would like to know what exact torque is being applied to each nut and, if possible, he would like to obtain a computer reading for each individual nut. In the past the applicant provided a torque chart which was based on the pressure applied to the power tool. This torque chart was established by the applicant on a calibration stand where he tested the tool prior to shipment, for pressure versus torque output. The problem with this approach is that when something goes wrong with the tool and the pressure can build up, the operator might think that he has obtained the desired torque. In reality he only obtained the pressure in the system. In addition, the customer likes to calibrate the tools used during assembly prior to the assembly, which requires the purchase of a calibration stand.

Another known approach is disclosed in DE-A-3150383 which describes a device for transfering torque, applied by means of a power tool, indirectly via a socket boby to a threaded connector. A strain measuring means positioned axially outwardly of the socket body measures the torque applied by the power tool.

### Disclosure of the Invention

Accordingly, it is an object of the present invention to provide a device and in particular a socket which eliminates the disadvantages of the prior art.

In keeping with this object and with others which will become apparent hereinafter, there is provided a socket as claimed in the ensuing claim 1.

When the socket is designed in accordance with the present invention, the measurement of the turning resistance of the nut relative to the turning force of the drive portion of the power tool is performed, and the torque reading equals exactly the torque applied. Since the strain measuring means such as strain gauges in the socket is connected to a read-out device, it is possible to print out the results. Thereby, the studs to be tightened can be numbered and added later to the record of the job.

Furthermore, if a customer just requires a tool calibration prior to the job, it can be done by simply applying the socket to the tool and measuring the pressure versus torque output on a tight nut.

In accordance with an especially advantageous feature of the present invention, the socket has a housing and an adaptor which is inserted in the housing and is provided with the strain measuring means. When the socket is designed in accordance with these features, one single adaptor can be used for a variety of socket/nut sizes.

In accordance with a further advantageous feature of the present invention, the electrical conductors leading from the strain measuring means outwardly of the socket are arranged in a guide which is freely movable relative to the socket to prevent tangling up the conductors during turning of the socket.

The novel features which are considered as characteristic for the invention are set forth in particular in the appended claims. The invention itself, however, both as to its construction and its method of operation, together with additional objects and advantages thereof, will be best understood from the following description of specific embodiments when read in connection with the accompanying drawings.

### Brief Description of the Drawings

The single FIGURE of the drawings is a view schematically showing a socket for turning a threaded connector by a power tool in accordance with the present invention.

### Best Mode of Carrying Out the Invention

A socket for turning a threaded connector by a power tool in accordance with the present invention has a socket body which is identified as a whole with reference numeral 1. In a shown example the socket body is cylindrical and has an axis 2. The socket body has one axial end provided with means 3 for connecting the socket body with a not shown power tool. The connecting means 3 can be formed by a plurality of axially extending splines. The socket body further has another end provided with means 4 for engaging a threaded connector such as a nut. The engaging means 4 is formed in the shown embodiment as a hexagonal opening.

In accordance with the present invention, the socket is provided with strain measuring means arranged in the socket body 1 as identified with reference numeral 5. This strain measuring means can be formed as well known mechano-electrical strain gauges incorporated in the socket body 1 and connected by electrical conductors 6 with not shown strain evaluating device provided, for example, with a read-out.

The socket in accordance with the present invention operates in the following manner: When a power tool, for example a wrench is connected with the socket by interengagement of the splines of the drive portion of the power tool with the splines 3 of the socket, the socket is applied onto a threaded connector such as a nut by applying its hexagonal opening 4 on the nut, the power tool is actuated and turns the socket body 1, so that the socket body 1 turns the nut. During turning of the nut, the strain measuring mean 5 measure the turning resistance of the socket relative to the power applied by the power tool.

In accordance with an advantageous embodiment of the invention, the socket body 1 has a housing 7 and an adaptor 8 arranged in the housing. The housing and the adaptor are formed as hollow bodies of revolution, and the adaptor 8 has an outer cylindrical portion provided with a thread which engages with a thread in an inner cylindrical opening of the housing 7 as identified with reference numeral 9. The adaptor 8 is provided with the splines 3 for connecting to the power tool, while the housing 7 is provided with the hexagonal opening 4 for engaging with the nut. The adaptor and the housing are connected with one another by holding screws 10. In such a construction one single adaptor can be provided for a variety of socket/nut sizes.

In accordance with a further advantageous feature of the present invention, the electrical conductors 6 which extend from the strain gauges 5 outwardly of the socket to the evaluating device are guided so that they do not tangle up during turning of the socket. In particular, a guiding member 11 is provided for this purpose. The guiding member 11 is formed as a ring which is freely turnable on an upper cylindrical portion of the adaptor 8 and turnably held on it by a retainer 12. The electrical conductors, for example an electrical cable, is guided through the guiding member 11. During turning of the socket, the adaptor 8 and the housing 7 turn, while the guiding member 11 is retained substantially non-turnable to prevent tangling up of the electrical conductor 6.

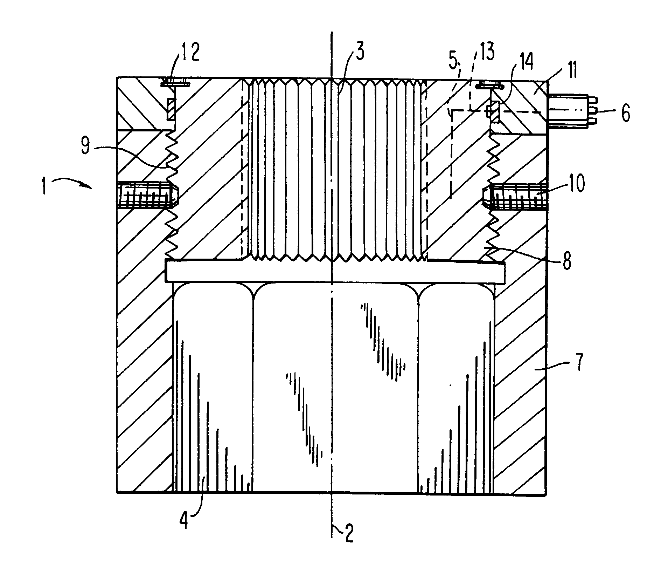

In order to provide electrical connection between the strain gauges 5 and the electrical conductor 6, a conductive metal ring 14 can be embedded in the inner surface of the guiding member 11 and connected with the electrical conductor 6, while the strain gauges 5 are in contact with the conductive metal ring 11 by an additional conductor 13 as shown in FIG. 1.

## Claims

1. A socket for turning a threaded connector by means of a power tool, comprising a socket body (1) having an axis (2), connecting means (3) at one axial end of the socket body (1) for connecting the latter to a power tool, engaging means (4) in said socket body (1) at the opposite axial end thereof for engaging with a threaded connector, and strain measuring means (5), whereby in use torque, applied by a power tool, is transferred via the socket body (1) to a threaded connector engaged by the engaging means (4), characterised in that the socket body (1) is constructed so as to transfer torque applied by a power tool connected to the connecting means (3) directly to a threaded connector engaged by the engaging means (4), and in that the strain measuring means (5) is arranged in said socket body (1) between the connecting means (3) and the engaging means (4) in a position such that in use, when a power tool is connected to the connecting means (3), the engaging means (4) engages a threaded connector and the power tool turns the socket body (1) and therefore the threaded connector, the strain measuring means (5) measures the strain in the socket body, and thus provides a measure of the torque applied by the power tool to the socket body and therefore to the threaded connector.

2. A socket according to claim 1, characterised in that said socket body (1) has a housing (7) and an adaptor (8) arranged therein, said strain measuring means (5) being located in said adaptor (8).

3. A socket according to claim 2, characterised in that said connecting means (3) is provided in said adaptor (8) and in that said engaging means (4) is provided in said housing (7).

4. A socket according to claim 2 or 3, characterised in that said adaptor (8) and said housing (7) are hollow bodies of revolution and in that the adaptor (8) is coaxially arranged inside the housing (7).

5. A socket according to any one of claims 2 to 4, characterised in that the socket further comprises connection means for connecting the adaptor (8) to the housing (7).

6. A socket according to any one of the preceding claims, characterised in that said strain measuring means (5) comprises a mechano-electrical operating means and in that the socket further comprises electrical conductor means (6) extending from said strain measuring means (5) outwardly of the socket body (1).

7. A socket according to claim 6, characterised in that the socket further comprises guiding means (11) for guiding said electrical conductor means (6), said guiding means including a guiding member (11) through which said electrical conductor means (6) extend and which is freely movable relative to said socket body (1) so that during turning of said socket body the electrical conductor means do not tangle.

8. A socket according to claim 7, characterised in that said guiding member (11) is formed as a substantially ring-shaped member and in that said socket body (1) has a substantially cylindrical portion on which the substantially ring-shaped member is freely turnable.

## Patentansprüche

1. Steckschlüssel zum Drehen eines Schraubverbinders mittels eines kraftangetriebenen Werkzeugs, mit einem eine Achse (2) aufweisenden Steckschlüsselkörper (1), einem Verbindungsmittel (3) an einem axialen Ende des Steckschlüsselkörpers (1) zur Verbindung des letzeren mit einem kraftangetriebenen Werkzeug, einem Eingriffsmittel (4) im Steckschlüsselkörper (1) am gegenüberliegenden axialen Ende davon zum Eingriff mit einem Schraubverbinder, und einem Dehnungsmeßmittel (5), wobei im Gebrauch ein durch ein kraftangetriebenes Werkzeug angelegtes Drehmoment über den Steckschlüsselkörper (1) zu einem durch das Eingriffsmittel (4) in Eingriff genommenen Schraubverbinder übertragen wird, dadurch gekennzeichnet, daß der Steckschlüsselkörper (1) so ausgeführt ist, daß er ein durch ein mit dem Verbindungsmittel (3) verbundenes kraftangetriebenes Werkzeug angelegtes Drehmoment direkt auf einen durch das Eingriffsmittel (4) in Eingriff genommenen Schraubverbinder überträgt und daß das Dehnungsmeßmittel (5) zwischen dem Verbindungsmittel (3) und dem Eingriffsmittel (4) in einer solchen Position in dem Steckschlüsselkörper (1) angebracht ist, daß im Gebrauch bei Verbindung zwischen dem kraftangetriebenen Werkzeug mit dem Verbindungsmittel (3) das Eingriffsmittel (4) einen Schraubverbinder in Eingriff nimmt und das kraftangetriebene Werkzeug den Steckschlüsselkörper (1) und deshalb den Schraubverbinder dreht, wobei das Dehnungsmeßmittel (5) die Dehnung im Steckschlüsselkörper mißt und somit eine Messung des durch das kraftangetriebene Werkzeug an den Steckschlüsselkörper und deshalb an den Schraubverbinder angelegten Drehmoments liefert.

2. Steckschlüssel nach Anspruch 1, dadurch gekennzeichnet, daß der Steckschlüsselkörper (1) ein Gehäuse (7) und ein darin angeordnetes Zwischenstück (8) aufweist, wobei das Dehnungsmeßmittel (5) in dem Zwischenstück (8) angeordnet ist.

3. Steckschlüssel nach Anspruch 2, dadurch gekennzeichnet, daß das Verbindungsmittel (3) in dem Zwischenstück (8) und das Eingriffsmittel (4) in dem Gehäuse (7) vorgesehen ist.

4. Steckschlüssel nach Anspruch 2 oder 3, dadurch gekennzeichnet, daß das Zwischenstück (8) und das Gehäuse (7) hohle Drehkörper sind und daß das Zwischenstück (8) koaxial in dem Gehäuse (7) angeordnet ist.

5. Steckschlüssel nach einem der Ansprüche 2 bis 4, dadurch gekennzeichnet, daß der Steckschlüssel weiterhin ein Verbindungsmittel zur Verbindung des Zwischenstücks (8) mit dem Gehäuse (7) umfaßt.

6. Steckschlüssel nach einem der vorhergehenden Ansprüche, dadurch gekennzeichnet, daß das Dehnungsmeßmittel (5) ein mechanisch-elektrisches Betätigungsmittel umfaßt und daß der Steckschlüssel weiterhin sich von dem Dehnungsmeßmittel (5) aus dem Steckschlüsselkörper (1) heraus nach außen erstreckende elektrische Leitermittel (6) umfaßt.

7. Steckschlüssel nach Anspruch 6, dadurch gekennzeichnet, daß der Steckschlüssel weiterhin ein Führungsmittel (11) zur Führung der elektrischen Leitermittel (6) umfaßt, wobei das Führungsmittel ein Führungsglied (11) enthält, durch das sich die elektrischen Leitermittel (6) erstrecken und das bezüglich des Steckschlüsselkörpers (1) beweglich ist, so daß sich die elektrischen Leitermittel beim Drehen des Steckschlüsselkörpers nicht verheddern.

8. Steckschlüssel nach Anspruch 7, dadurch gekennzeichnet, daß das Führungsglied (11) als ein im wesentlichen ringförmiges Glied ausgebildet ist und daß der Steckschlüsselkörper (1) einen im wesentlichen zylindrischen Teil aufweist, an dem das im wesentlichen ringförmige Glied frei drehbar ist.

## Revendications

1. Douille servant à faire tourner un connecteur fileté à l'aide d'un outil électrique, comprenant un corps de douille (1) ayant un axe (2), un moyen de connexion (3) à une extrémité axiale du corps de douille (1) pour connecter ce dernier à un outil électrique, un moyen d'engagement (4) dans ledit corps de douille (1) à son extrémité axiale opposée pour engager un connecteur fileté, et un moyen de mesure de la contrainte (5), dans laquelle, en fonctionnement, le couple, appliqué par un outil électrique, est transféré par le biais du corps de douille (1) à un connecteur fileté engagé par le moyen d'engagement (4), caractérisée en ce que le corps de douille (1) est construit de manière à transférer le couple appliqué par un outil électrique connecté au moyen de connexion (3) directement à un connecteur fileté engagé par le moyen d'engagement (4), et en ce que le moyen de mesure de la contrainte (5) est arrangé dans ledit corps de douille (1) entre le moyen de connexion (3) et le moyen d'engagement (4) dans une position telle qu'en fonctionnement, lorsqu'un outil électrique est connecté au moyen de connexion (3), le moyen d'engagement (4) engage un connecteur fileté et l'outil électrique fasse tourner le corps de douille (1) et par conséquent le connecteur fileté, le moyen de mesure de la contrainte (5) mesure la contrainte dans le corps de douille, et fournisse ainsi une mesure du couple appliqué par l'outil électrique au corps de douille et donc au connecteur fileté.

2. Douille selon la revendication 1, caractérisée en ce que ledit corps de douille (1) a un logement (7) et un adaptateur (8) disposés dans celui-ci, ledit moyen de mesure de la contrainte (5) étant situé dans ledit adaptateur (8).

3. Douille selon la revendication 2, caractérisée en ce que ledit moyen de connexion (3) est prévu dans ledit adaptateur (8) et en ce que ledit moyen d'engagement (4) est prévu dans ledit logement (7).

4. Douille selon la revendication 2 ou 3, caractérisée en ce que ledit adaptateur (8) et ledit logement (7) sont des corps creux de révolution et en ce que l'adaptateur (8) est disposé coaxialement à l'intérieur du logement (7).

5. Douille selon l'une quelconque des revendications 2 à 4, caractérisée en ce que la douille comprend en outre un moyen de connexion pour connecter l'adaptateur (8) au logement (7).

6. Douille selon l'une quelconque des revendications précédentes, caractérisée en ce que ledit moyen de mesure de la contrainte (5) comprend un moyen à fonctionnement électromécanique et en ce que la douille comprend en outre des moyens conducteurs électriques (6) s'étendant depuis ledit moyen de mesure de la contrainte (5) vers l'extérieur du corps de douille (1).

7. Douille selon la revendication 6, caractérisée en ce que la douille comprend en outre un moyen de guidage (11) pour guider lesdits moyens conducteurs électriques (6), ledit moyen de guidage comportant un élément de guidage (11) à travers lequel s'étendent lesdits moyens conducteurs électriques (6) et étant librement mobile par rapport audit corps de douille (1) de sorte que lors de la rotation dudit corps de douille, les moyens conducteurs électriques ne s'emmêlent pas.

8. Douille selon la revendication 7, caractérisée en ce que ledit élément de guidage (11) est formé en tant qu'élément de forme substantiellement annulaire et en ce que ledit corps de douille (1) a une portion substantiellement cylindrique sur laquelle l'élément de forme substantiellement annulaire est susceptible de tourner librement.
